# NEW EUROPEAN PATENT SPECIFICATION

(11) **EP 0 332 717 B2**
(45) Date of publication and mention of the opposition decision: **29.06.2005**
(45) Mention of the grant of the patent: 08.06.1994
(21) Application number: 88104002.6
(22) Date of filing: 14.03.1988
(51) Int. Cl.: C03C 17/36, E06B 3/66

(54) **Process for producing a transparent laminated product**
Verfahren zur Herstellung eines transparenter mehrschichtiger Gegenstand
Procédé dobtention d'un produit laminé transparent

(43) Date of publication of application: 20.09.1989
(73) Proprietor: ASAHI GLASS COMPANY LTD., Tokyo 100-8405 (JP)
(72) Inventor: Oyama, Takuji, Yokohama-shi Kanagawa-ken (JP); Suzuki, Koichi, Yokohama-shi Kanagawa-ken (JP); Mizuhashi, Mamoru, Yokohama-shi Kanagawa-ken (JP)
(74) Representative: Rucker, Ernst, Dr. Dipl.-Chem.

(56) References cited:
- EP-A- 0 031 278
- EP-A- 0 035 906
- EP-A- 0 219 273
- EP-A- 0 226 993
- EP-A- 0 303 586
- EP-A- 0 303 587
- WO-A-88/01230
- WO-A-90/05439
- DE-A- 2 854 213
- FR-A- 2 273 777
- GB-A- 2 126 256
- US-A- 3 682 528
- US-A- 4 179 181
- US-A- 4 718 932
- US-A- 4 725 710
- GLASS TECHNOLOGY, vol. 21, no. 5, October 1980, pages 254-261, Sheffield, GB; H.-J. GLÄSER: "Improved insulating glass with low emissivity coatings based on gold, silver, or copper films embedded in interference layers"
- Kirk-Othmer, Encyclopedia of Chemical Technology, 22 (1970), pages 608 - 611
- Thin Solid Films 77, (1981), pages 107 - 117: G. Frank et al.: "Transparent heat-reflecting coatings based on highly doped semiconductors"
- Thin-film Optical Filters (1969), édition Adam Hilger Ltd., H.A. Macleod, Pages 157 - 161
- J. Optical Soc. of America 47 (1957), 230 - 239, P.H. Berning, A.F. Turner: "Induced transmission in absorbing films applied to band pass filter design"
- Applied Optics, Vol. 22, No. 24, pages 4127 - 4141 (1983): P.H. Bering: "Principles of Design of Architectural Coatings"
- Diagram filed on 05.02.2002, comparing the transmittance and reflectance data of A5, Table I example III, and example 3 of the opposed patent
- T. Oyama, M. Mizuhashi and K. Suzuki, "Performance of newly developed heat mirrors with Ag based multilayer coatings", IPAT 89, 7th Intern. Conference on Ion and Plasma Assisted Techniques, Geneva, May 1989, pages 347 - 352

## Description

The present invention relates to a process for producing a transparent laminated product having electrical conductivity, infrared reflectivity and electromagnetic wave shielding effect.

Heretofore, it has been in practice to form a layer of indium oxide or tin oxide on a glass or plastic substrate and to use the product as a transparent conductive substrate. However, the specific resistance of the transparent conductive layer of this type was at a level of 5 x 10⁻⁴ Ω.cm when formed at room temperature, and in order to obtain a surface resistance of not higher than 10 Ω /sq., it used to be required to have a layer thickness of at least 5,000 Å. Further, the transparent conductive layer of this type had a refractive index of about 2.0, and when formed on a glass substrate having a refractive index of e.g. 1.5, it had a reflectance as high as about 25%, whereby the surface glare was strong, such being undesirable from the viewpoint of outer appearance.

It has been reported that the specific resistance of the transparent conductive layer of this type can be reduced to a level of 1 x 10⁻⁴ Ω.cm by forming such a transparent conductive layer on a substrate at a high temperature. However, it is undesirable to heat the substrate from the viewpoint of the production, since such operation adds to the cost.

There are two types of infrared reflecting glass. Namely, the first type is a so-called solar control which is used primarily for the purpose of reducing an air-cooling load, and the second type is a so-called heat mirror which is used primarily for the purpose of reducing a heating load. The minimum characteristics required for the second type are a high transmission at the visible region and a sufficiently high reflectance at the infrared region. However, if the reflectance at the near infrared region can be increased, it will also have a function as a solar control, such being preferred. The following three types of coating have been known for the infrared reflecting glass of this type:
(1) Thin layer of a metal having a thickness of the about 100 Å
(2) Doped oxide semiconductor layer
(3) 3-Layered coating of dielectric layer/metal layer/dielectric layer.

Specifically, as type (1), a thin layer of Au, Ag or Cu is used, and as type (2), a layer of SnO₂ or In₂O₃ having a thickness of at least 5,000 Å is used. As type (3), a structure in which a silver layer is sandwiched between dielectric layers, is disclosed in Japanese Examined Patent Publication No. 6315/1972, in EP-A-31278, and in Glass Technologie Vol 21, 1980, page 254-260.

Among them, type (1) has a drawback such that in order to obtain a sufficiently high reflectance at the infrared region, the metal layer is required to be thick, whereby the transmittance at the visible region will be low. Type (2) has drawbacks such that in order to obtain a sufficiently high reflectance at the infrared region, the thickness of the layer is required to be as thick as at least 500 nm(5,000 Å), and the reflectance at the near infrared region can not be improved.

Whereas, type (3) is advantageous in that the dielectric layers having a metal layer interposed therebetween serve as a reflection preventing layer, whereby a sufficiently high reflectance at the infrared region and a high transmission at the visible region can be obtained with an overall layer thickness of not higher than 100 nm (1,000 Å), and thus this type is widely used. However, even with this type, the thickness of the intermediate metal layer is required to be not higher than 20 nm (200 Å), preferably not higher than 15 nm (150 Å), in order to obtain a high level of transmittance at the visible region, whereby the reflectance at the infrared region will be about 95% at best, hence the emittance will be about 5%. Further, the reflectance at the near infrared region can not be improved, and the reflectance of the solar energy will be not higher than about 25%.

In order to obtain a sufficiently high visible ray transmission and at the same time to control the visible ray reflectance to a level of a usual transparent glass, the silver layer thickness was limited to a level of about 120 Å, and the surface resistance was thereby about 12 Ω/sq. This is because the specific resistance of silver in the form of a thin layer is greater than the value of the bulk. Further, as will be given as a Comparative Example hereinafter, the spectral reflectivity will be in a U-form at the visible region, and the reflection color will be restricted to a color of violet type, whereby variation in the color will be limited, which is a serious drawback from the ornamental point of view.

In summary, the conventional techniques had the following drawbacks:
(a) In order to obtain a high transmission at the visible region and a sufficiently high reflectance at the infrared region, type (3) is the best. However, it is still inadequate.
(b) The color of reflection is limited to a color of violet type.
(c) The rising of reflectance at the near infrared region is not sharp.

US-A-4 179 181 discloses infrared reflecting articles having an interference coating which has a period of three layers in which the first and third layers are refractory dielectric material and the intermediate layer is silver having a thickness between about 110 and 250 Å. The dielectric material may be selected from the group of TiO₂, CeO₂, ZrO₂, Nd₂O₃, MgO, AL₂O₃ and SiOₓ. When a sharp cut-off between reflected and transmitted light is desired, the period may be doubled to give a total of six layers in the interference coating.

It is an object of the present invention to solve the above-mentioned drawbacks inherent to the conventional techniques and to provide a process for producing a transparent electrically conductive laminated product having an adequately low surface resistance, an adequately high visible ray transmission and a visible ray reflectance at a level of a usual transparent glass sheet, having a very high reflectance at the infrared region and a sufficiently high transmission at the visible region, whereby the color of reflection can be varied fairly freely, and whereby the reflectance at the near infrared region shows sharp rising.

The present invention provides a process for producing a transparent laminated product as defined in claim 1.

Furthermore, in the process of the present invention the thickness of each silver layer is preferably within the range of 6 to 11nm (60 to 110Å). Furthermore, preferably n=2.

In the drawings:
Figures 1 and 2 are diagramatic cross-sectional views of typical embodiments of the present invention, wherein each of reference numerals 1 and 10 designates a transparent substrate, each of numerals 2, 4, 6 and 11 designates a transparent oxide layer and each of numerals 3, 5 and 12 designates a silver layer.
Figure 3 is a graph showing the spectral properties of Example 2, wherein reference numerals 21 and 22 represent the spectral transmittance and reflectance of Example 2, respectively.
Figure 4 is a graph showing the spectral properties of Example 6, wherein reference numerals 31 and 32 represent the spectral transmittance and reflectance of Example 6, respectively.
Figure 5 is a graph showing the spectral properties of Comparative Examples 1 and 2, wherein reference numerals 41 and 42 represent the spectral transmittance and reflectance of Comparative Example 1, respectively, and reference numerals 43 and 44 represent the spectral transmittance and reflectance of Comparative Example 2, respectively.
Figure 6 is a diagramatic cross-sectional view of Comparative Example 1, wherein reference numeral 50 designates a transparent substrate, each of numerals 51 and 53 designates a transparent dielectric layer, and numeral 52 designates a silver layer.

Now, the present invention will be described in detail.

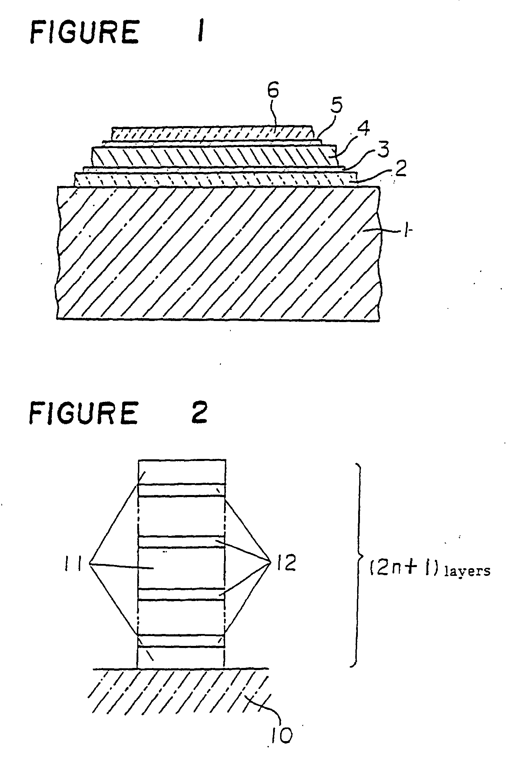

Figures 1 and 2 show partial cross-sectional views of transparent laminated products obtained by the process of the present invention. In Figure 1, reference numeral 1 designates a transparent substrate, numeral 2 designates a first transparent oxide layer, numeral 3 designates a second silver layer, numeral 4 designates a third transparent oxide layer, numeral 5 designates a fourth silver layer and numeral 6 designates a fifth transparent oxide layer. In Figure 2, reference numeral 10 designates a transparent substrate, numeral 11 designates a transparent oxide layer, and numeral 12 designates a silver layer.

In the present invention, the transparent substrate may be a glass sheet or a plastic sheet. More specifically, it may be usual sheet glass or float glass made of colorless transparent or colored transparent soda lime silica glass depending upon the desired visible ray transmission or color tone. Further, it may be heat ray absorbing glass having various colors such as blue, bronze or green, or various other types of glass including aluminosilicate glass, lithium aluminosilicate glass and borosilicate glass.

As the transparent oxide layer in the present invention, ZnO having a high refractive index is used. ZnO is most suitable from the viewpoint of productivity since the layer-forming speed in sputtering is high.

In a preferred embodiment of the present invention, the thickness of each layer may be roughly as follows, although it may vary depending upon the material to be used.

Namely, the inner most and outer most transparent oxide layers (e.g. the first and fifth layers in the case of a 5-layered coating, and the first and seventh layers in the case of a 7-layered coating) have a thickness of from 20 to 60 nm (200 to 600 Å), and other transparent oxide layers (e.g. the third layer in the case of the 5-layered coating, and the third and fifth layers in the case of the 7-layered coating) have a thickness or from 40 to 120 nm (400 to 1,200 Å). Each silver layer has a thickness of from 6 to 12 nm (60 to 120 Å). These thickness ranges are set to obtain an adequate visible ray transmission. If the layer thicknesses depart from these ranges, the antireflection condition will be broken, or the visible ray transmission will be low.

The thickness of the silver layer is suitably selected within the above-mentioned range of from 6 to 12 nm (60 to 120 Å) depending upon the required properties. For example, in order to obtain electric conductivity with particularly low resistance, for example, to obtain a surface resistance of not higher than 6 Ω/sq., the silver layer should preferably be thick, for example, within a range of from 11 to 12 nm (110 to 120 Å).

Further, the silver layer should preferably be thick in order to make the rising of reflectance sharp at the near infrared region. However, there will then be side effects such that the transmission at the visible region tends to be low, the low reflectance region tends to be narrow, and the variation in the color of reflection by the control of the layer thickness will be rather limited. On the other hand, the silver layer should preferably be thin from the viewpoint of an increase of the transmission and freedom in the choice of the reflection color. However, then, the rising of the reflectance at the near infrared region tends to be blunt, and the reflectance at the infrared region also decreases. Further, if the silver layer thickness is too thin, silver may form island structure, whereby the desired properties will not be obtained. For these reasons the silver layer should preferably have a thickness of from 6 to 11 nm (60 to 110 Å), more preferably from 8 to 11 nm (80 to 110 Å), in order to obtain a high transmission at the visible range and a wide range of selection of the reflection color.

The multi-layered coating of the present invention can readily be formed by vacuum evaporation, sputtering or ion plating. However, the method of forming the coating is not restricted to such methods, and other techniques such as a dipping method or a spray method may also be employed.

In the transparent laminated product obtained by the present invention, silver layers bearing even numbers such as the second and fourth layers serve as conductive layers. The resistivity of a silver layer is lower by at least one figure than that of an indium oxide layer or a tin oxide layer, and it is thereby possible to obtain a surface resistance of not higher than 6 Ω/sq., with an overall layer thickness of about 200 nm (2,000 Å).

Further, the silver layers bearing the even numbers serve to increase the reflectance at the infrared region.

In the transparent laminated product obtained by the present invention, the transparent oxide layers bearing odd numbers such as the first, third and fifth layers serve as reflection preventing layers at the visible region of the silver layers and serve to increase the visible ray transmission and at the same time reduce the visible ray reflectance so that they function as transparent conductive layers or infrared reflecting layers having a visible ray transmission of at least 60%, particularly at least 70%, as a whole.

In the present invention, it is possible to change the reflection color relatively freely while maintaining a high transmittance at the visible region and a high reflectance at the near infrared to the infrared region, by adjusting the layer thicknesses of the respective layers within suitable ranges.

Now, the present invention will be described in further detail with reference to Examples. However, it should be understood that the present invention is by no means restricted to such specific Examples.

### EXAMPLE 1

A glass substrate was set in a vacuum chamber, and the chamber was evacuated to 1.33 x 10⁻⁶ mbar (1 x 10⁻⁶ Torr). Then, oxygen gas was introduced, and the pressure was adjusted to 2.26 x 10⁻³ mbar (1.7 x 10⁻³ Torr). Then, a zinc target was subjected to radio frequency magnetron sputtering to form a ZnO layer of about 40 nm (400 Å) on the substrate at room temperature as a first layer. Then, the introduced gas was changed to argon and the pressure was adjusted to 1.73 x 10⁻³ mbar (1.3 x 10⁻³ Torr), whereupon a silver target was subjected to radio frequency magnetron sputtering to form a Ag layer of about 12 nm (120 Å) as a second layer. Then, a third layer of ZnO was formed under the same condition as for the first layer in a thickness of about 80 nm (800 Å) Then, a fourth layer of Ag was formed under the same condition as for the second layer in a thickness of about 12 nm (120 Å). Then, a fifth layer of ZnO was formed under the same condition as for the first layer in a thickness of about 40 nm (400 Å). The total thickness of the coating was about 184 nm (1,840 Å).

The surface resistance of the sample No. 1 thus obtained was measured by a four point probe method and found to be 4.2 Ω/sq.

This sample had a visible ray transmission of 77.5% and a visible ray reflectance of 7.6%.

### EXAMPLE 2

A glass substrate was set in a vacuum chamber, and the chamber was evacuated to 1.33 x 10⁻⁶ mbar (1 x 10⁻⁶ Torr). Then, oxygen gas was introduced, and the pressure was adjusted to 2.26 x 10⁻³ mbar (1.7 x 10⁻³ Torr). Then, a zinc target was subjected to radio frequency magnetron sputtering to form-a ZnO layer on the substrate as a first layer. The thickness of the first layer was about 40 nm (400 Å). Then, in an argon atmosphere under a pressure of 1.86 x 10⁻³ mbar (1.4 x 10⁻³) Torr, a silver target was subjected to radio frequency magnetron sputtering to form a Ag layer as a second layer. The thickness of the second layer was about 10 nm (100 Å). Then, a third layer of ZnO was formed under the same condition as for the first layer in a thickness of about 80 nm (800 Å). Then, a fourth layer of Ag was formed under the same condition as for the second layer in a thickness of about 10 nm (100 Å). Then, a fifth layer of ZnO was formed under the same condition as for the first layer in a thickness of about 40 nm (400 Å).

The surface resistance of the sample thus obtained was measured by a four point probe method and found to be 5.5 Ω/sq.

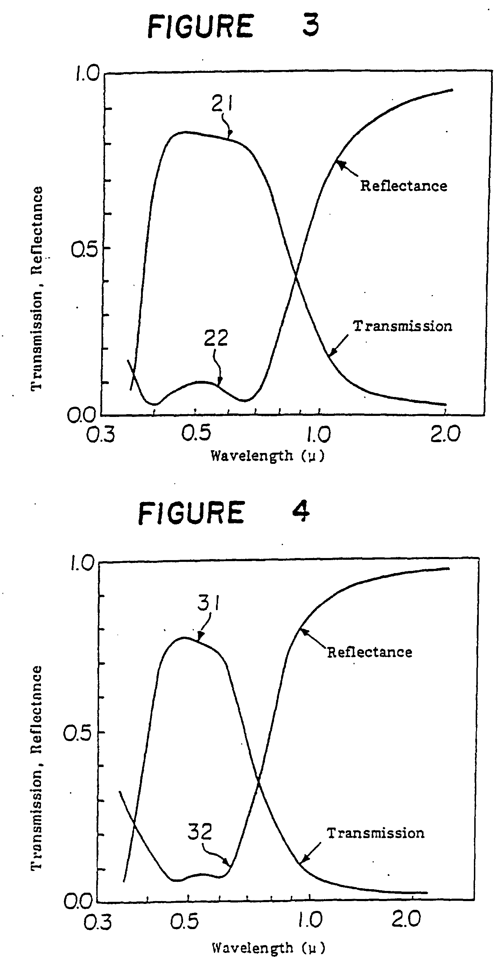

The spectral transmittance and the spectral reflectance of the sample No. 2 thus obtained are shown at 21 and 22, respectively in Figure 3. The Figure shows a high transmission at the visible range, a sharp rising of reflection at the near infrared region and the presence of the maximum in reflection at the center of the visible region. The color of reflection was green. The reflectance at a wavelength of 10 µm was 95%.

The properties were as follows:

| | |
|---|---|
| Visible ray transmission T_{V} | 80.2% |
| Solar energy transmission T_{E} | 47.2% |
| Visible ray reflectance R_{V} | 6.0% |
| Solar energy reflectance R_{E} | 33.9% |
| Reflectance at a wavelength of 10 µm R(10 µ) | 95% |
| Color of reflection | Green |

### EXAMPLE 3

A 5-layered coating was formed on a glass substrate under the same conditions as in Example 2 except that the thickness of the third layer was changed to about 65 nm (650 Å). The surface resistance was found to be 5.5 Ω/sq. The spectral curves of the sample No. 3 thus obtained showed a high transmission at the visible region and a sharp rising of the reflectance at the near infrared region, and reflection characteristics with a higher reflection at the longer wavelength side in the visible region. The color of reflection was bronze. The reflectance at a wavelength of 10 µm was 95%.

The properties were as follows:

| | |
|---|---|
| T_{V} | 76.9% |
| T_{E} | 44.0% |
| R_{V} | 8.8% |
| R_{E} | 38.8% |
| R (10µ) | 95% |
| Color of reflection | Bronze |

### EXAMPLE 4

A 5-layered coating was formed on a glass substrate under the same conditions as in Example 2 except that the thickness of the third layer was changed to about 95 nm (950 Å). The surface resistance was found to be 5.4 Ω/sq. The spectral curves of the sample No. 4 thus obtained showed a high transmission at the visible region and a sharp rising of the reflectance at the near infrared region, and reflection characteristics with a higher reflection at the shorter wavelength side in the visible region. The color of reflection was bluish green. The reflectance at a wavelength of 10 µm was 95%.

The properties were as follows:

| | |
|---|---|
| T_{V} | 78.7% |
| T_{E} | 45.4% |
| R_{V} | 8.1% |
| R_{E} | 31.9% |
| R (10µ) | 95% |
| Color of reflection | Bluish green |

### EXAMPLE 6 (Reference)

A glass substrate was set in a vacuum chamber, and the chamber was evacuated to 1.33 x 10⁻⁶ mbar (1 x 10⁻⁶ Torr). Then, oxygen gas was introduced, and the pressure was adjusted to 2.26 x 10⁻³ mbar (1.7 x 10⁻³ Torr). Then, a zinc target was subjected to radio frequency magnetron sputtering to form a ZnO layer on the substrate as a first layer. The thickness of the first layer was about 40 nm (400 Å). Then, in an argon atmosphere under a pressure of 1.86 x 10⁻³ mbar (1.4 x 10⁻³ Torr), a silver target was subjected to radio frequency magnetron sputtering to form a Ag layer as a second layer. The thickness of the second layer was about 14 nm (140 Å). Then, a third layer of ZnO was formed under the same condition as for the first layer in a thickness of about 80 nm (800 Å). Then, a fourth layer of Ag was formed under the same condition as for the second layer in a thickness of about 14 nm (140 Å). Then, a fifth layer of ZnO was formed under the same condition as for the first layer in a thickness of about 40 nm (400 Å). The surface resistance was found to be 3.4 Ω/sq.

The spectral transmittance and the spectral reflectance of the sample No. 6 thus obtained are shown at 31 and 32, respectively, in Figure 4. The Figure shows a high transmission at the visible range, a sharp rising of reflection at the near infrared region and the presence of the maximum in reflection at the center of the visible region. The color of reflection was purple. The reflectance at a wavelength of 10 µm was 98%.

The properties were as follows:

| | |
|---|---|
| Visible ray transmission T_{V} | 72.7% |
| Solar energy transmission T_{E} | 38.2% |
| Visible ray reflectance R_{V} | 8.1% |
| Solar energy reflectance R_{E} | 47.3% |
| Reflectance at a wavelength of 10 µm R(10 µ) | 98% |
| Color of reflection | Purple |

### EXAMPLE 7 (Reference)

A 5-layered coating was formed on a glass substrate under the same conditions as in Example 6 except that the thickness of the second and fourth layers were changed to about 20 nm (200 Å). The spectral curves of the sample No. 7 thus obtained showed a high transmission at the visible region and a sharp rising of the reflectance at the near infrared region. The color of reflection was purple. The reflectance at a wavelength of 10 µm was 99%.

The properties were as follows:

| | |
|---|---|
| T_{V} | 63.1% |
| T_{E} | 21.8% |
| R_{V} | 17.0% |
| R_{E} | 60.8% |
| R (10µ) | 99% |
| Color of reflection | Purple |

### EXAMPLE 8

With respect to the samples No. 1 and No. 7 (size: 5 cm x 15 cm x 0.3 cm) obtained in Examples 1 and 7, the attenuation of the electric field intensity was measured at frequencies of 600, 800 and 1,000 MHz by means of an electromagnetic wave shielding effect measuring apparatus (TR 4172 Model, manufactured by Takeda Riken K.K.). The results are shown in the following Table. Sample 8 is a SnO₂-coated glass plate having a surface resistance of 15 Ω/sq., which represents a comparative example.

| | Frequency (MHz) | | |
|---|---|---|---|
| | 600 MHz | 800 MHz | 1,000 MHz |
| Sample 1 | - 30 dB | -35 dB | -40 dB |
| Sample 7 | - 38 dB | -42 d8 | -47 dB |
| Sample 8 | - 14 dB | -19 dB | -24 dB |

As is evident from the above Tables, the sample 1 of the present invention and sample 7 of Reference Example 7 have excellent electromagnetic wave shielding effects.

### EXAMPLE 9

A 5-layered coating was formed on a glass substrate under the same conditions as in Example 1 except that the thickness of the fifth layer was changed to about 32 nm (320 Å). The surface resistance was found to be 4.2 Ω/sq. The spectral curves of the sample No. 9 thus obtained showed a high transmission at the visible region, a sharp rising of the reflectance at the near infrared region and the presence of the maximum in reflection near the center of the visible region. The color of reflection was green. The reflectance at a wavelength of 10 µm was 96%.

The properties were as follows:

| | |
|---|---|
| T_{V} | 80.5% |
| T_{E} | 50.7% |
| R_{V} | 9.3% |
| R_{E} | 31.0% |
| R (10µ) | 96% |
| Color of reflection | Green |

Then the sample No. 9 was laminated with another glass substrate by PVB film having a thickness of 0.75 mm. The properties of the laminated glass thus obtained were as follows:

| | |
|---|---|
| T_{V} | 79.5% |
| T_{E} | 46.0% |
| R_{V} | 9.7% |
| R_{E} | 29.9% |
| Color of reflection | Neutral |

As indicated above, the laminated glass obtainable by the process of the present invention shows high visible ray transmission, low solar energy transmission, low visible ray reflectance and low surface resistance i.e. excellent properties for a windshield of automobile.

### COMPARATIVE EXAMPLE 1

In the same manner as in Example 2, a glass substrate was prepared. Then, a zinc target was subjected to radio frequency magnetron sputtering to form a ZnO layer on the substrate as a first layer in a thickness of about 400 Å. Then, in the same manner as in Example 2, a Ag layer was formed as a second layer in a thickness of about 100 Å. Then, a ZnO layer was formed as a third layer in a thickness of about 400 Å under the same condition as for the first layer. The surface resistance was found to be 12.1 Ω/sq.

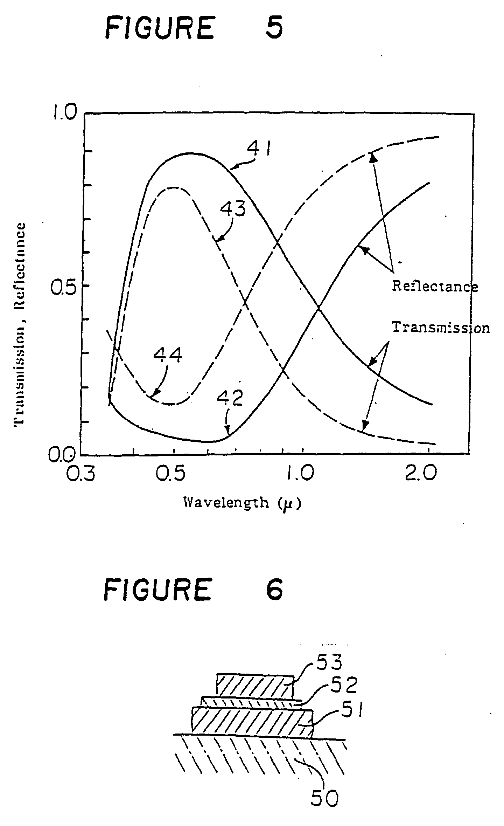

The spectral transmission and the reflectance of the sample No. 9 thus obtained are shown by the spectral curves 41 and 42 in Figure 5, respectively. As compared with Figures 3 and 4, the rising of the reflectance at the near infrared region is blunt, and the reflection curve at the visible region exhibits a U-shape, and the color of reflection was bluish purple. The reflectance at a wavelength of 10 µm was 85%, which is inferior to Examples 2 to 6.

The properties were as follows:

| | |
|---|---|
| T_{V} | 84.0% |
| T_{E} | 63.8% |
| R_{V} | 5.9% |
| R_{E} | 22.3% |
| R (10µ) | 85% |
| Color of reflection | Bluish purple |

### COMPARATIVE EXAMPLE 2

A 3-layered coating was formed on a glass substrate under the same conditions as in Comparative Example 1 except that the thickness of the second silver layer was changed to about 20 nm (200 Å). The surface resistance was found to be 4.9 Ω/sq. The spectral transmittance and the spectral reflectance of the sample No. 10 thus obtained are shown at 43 and 44 in Figure 5. As compared with Figure 4, the reflectance at the near infrared region is at the same level, but the transmittance at the visible region is lower and the reflectance is substantially higher. The color of reflection was reddish purple.

The properties were as follows:

| | |
|---|---|
| T_{V} | 67.8% |
| T_{E} | 40.2% |
| R_{V} | 23.2% |
| R_{E} | 50.1% |
| R (10µ) | 93% |
| Color of reflection | Reddish purple |

As is evident from the foregoing, according to the present invention, it is possible to obtain a transparent conductive laminated product having an adequately high visible ray transmission, an adequately low surface resistance and a low visible ray reflectance comparable to glass, with a coating having a thickness which is less than one half of the thickness required for the conventional transparent coating to obtain the same level of the surface resistance.

When used as a transparent electrode for a display element such as a liquid crystal display element, the product obtained by the present invention serves for the improvement in the response since the surface resistance is lower than the transparent electrode of the conventional ITO layer and is effective for an improvement of the visibility since the surface reflectance is comparable to glass.

Further, if the product obtained by the present invention is used as a part of a windshield for an automobile and suitable electrodes are provided, it is possible to obtain a windshield having defogging and ice-melting functions. In this case, it is advantageous that since the surface reflectance is comparable to glass, the visibility for the driver will not be impaired, and since the resistance is low as compared with the conventional ITO layer or a 3-layered coating of dielectric/metal/dielectric, the required voltage will be low.

In the present invention, a silver layer having high conductivity is used, and the reflectance at the infrared region is very high. By utilizing this property, the product obtained by the present invention can be used for a window of a building as a heat mirror. In such a case, it is possible to obtain a preferable heat mirror having features such that the infrared reflectance is high and the variation in the reflection color is wide as compared with the conventional ITO layer or the 3-layered coating of dielectric/metal/dielectric.

Further, the product obtained by the present invention has a feature that a low resistance is obtained with a small layer thickness and at a low substrate temperature as compared with the conventional ITO layer which used to be employed as a transparent conductive layer, thus presenting a substantial merit for the production.

As is evident from the foregoing Examples and Comparative Examples, according to the present invention, it is possible to obtain an infrared reflecting article having a sufficiently high visible ray transmission, a very high infrared reflectance and a sharp rising of the reflectance in the near infrared region. In particular, according to the present invention, it is possible to obtain a low radiation glass, particularly a glass having ε≤0.1.

Further, by adjusting the thicknesses of the respective layers within suitable ranges, it is possible to change the color of reflection quite freely. Thus, the product obtained by the present invention has a feature that the merit in the ornamental aspect is significant. Especially, it is easy to obtain various reflection colors in a pale color tone.

Preferred embodiments of the present invention include not only simple use of the transparent substrate provided with the multi-layered coating obtained by the present invention alone but also a case wherein the transparent plastic film used according to the present invention is bonded on a glass sheet as well as a case wherein the product obtained by the present invention is used as a part of a double glazing window or a triple glazing window. The product obtained by the present invention may also be used as a part of a laminated glass.

Thus, according to the present invention, it is possible to obtain a heat mirror having a sufficiently high visible ray transmission and a variety of reflection color, and it is possible to effectively reduce the heating load in a building or a house. On the other hand, it is possible to obtain a transparent conductive coating having a sufficiently high visible ray transmission and a sufficiently low surface resistance, which may effectively be used for a substrate of a display element or for a windshield of an automobile.

The transparent laminated product obtained by the present invention have excellent electromagnetic wave shielding effects and is capable of preventing leakage of electromagnetic waves generated by computer equipments, word processors, etc. from the room to outside, or preventing interfering waves from entering into the room from outside and thus is capable of preventing erroneous actuation of industrial robots or interference to television receivers. Thus, the transparent laminated product obtained by the present invention is useful as an electromagnetic wave shielding window glass.

## Claims

1. A process for producing a transparent laminated product consisting of a transparent substrate and a coating consisting of transparent oxide and silver layers alternately laminated in a total of (2n + 1) (n≥2) layers with the inner most and outermost layers being transparent oxide layers and having a surface resistance of not higher than 6 Ω/sq. and a visible ray transmission of at least 60 %, wherein each transparent oxide layer is a ZnO layer, including the steps of adjusting the thickness of each silver layer within the range of 6 to 12 nm (60 to 120 Å), the thickness of the innermost and outermost transparent oxide layers within the range of from 20 to 60 nm (200 to 600 Å), and the thickness of the other transparent oxide layers within the range of 40 to 120 nm (400 to 1200 Å) to obtain the desired colour of reflection.

2. The process according to claim 1, wherein the thickness of each silver layer is within the range of 6 to 11 nm (60 to 110 Å).

3. The process according to claim 1 or 2, wherein n = 2.

## Patentansprüche

1. Verfahren zum Herstellen eines transparenten, mehrschichtigen Gegenstandes, welcher aus einem transparenten Substrat und einer Beschichtung, bestehend aus transparenten Oxid- und Silberschichten, die abwechselnd mit insgesamt (2n + 1) (n≥2) Schichten aufeinanderlaminiert sind, wobei die innerste und die äußerste Schicht transparente Oxidschichten sind, die einen Oberflächenwiderstand von nicht höher als 6 Ω/sq. und eine Transmission für sichtbare Strahlung von mindestens 60 % aufweisen, wobei jede transparente Oxidschicht eine ZnO-Schicht ist, besteht, welches die Schritte des Einstellens der Dicke jeder Silberschicht innerhalb des Bereiches von 6 bis 12 nm (60 bis 120 Å), der Dicke der innersten und der äußersten transparenten Oxidschicht innerhalb des Bereiches von 20 bis 60 nm (200 bis 600 Å) und der Dicke der anderen transparenten Oxidschichten innerhalb des Bereiches von 40 bis 120 nm (400 bis 1200 Å) einschließt, um die gewünschte Reflexionsfarbe zu erhalten.

2. Verfahren nach Anspruch 1, wobei die Dicke jeder Silberschicht innerhalb des Bereiches von 6 bis 11 nm (60 bis 110 Å) liegt.

3. Verfahren nach Anspruch 1 oder 2, wobei n = 2.

## Revendications

1. Procédé pour la production d'un produit feuilleté transparent constitué d'un substrat transparent et d'un revêtement composé de couches d'oxyde et d'argent transparentes, disposées en alternance, pour former un total de (2n+1) (n≥2) couches, les couches les plus intérieure et extérieure étant des couches d'oxyde transparentes et présentant une résistance de surface de 6Ω/carré au plus et un pouvoir de transmission des rayons visibles d'au moins 60%, dans lequel chaque couche d'oxyde transparente est une couche de ZnO, ce procédé comprenant les étapes qui consistent à ajuster l'épaisseur de chaque couche d'argent dans l'intervalle de 6 à 12 nm (60 à 120 Å), à ajuster l'épaisseur des couches d'oxyde transparentes les plus intérieure et extérieure dans l'intervalle de 20 à 60 nm (200 à 600 Å), et à ajuster l'épaisseur des autres couches d'oxyde transparentes dans l'intervalle de 40 à 120 nm (400 à 1 200 Å) pour obtenir la couleur de réflexion désirée.

2. Procédé selon la revendication 1, dans lequel l'épaisseur de chaque couche d'argent est comprise dans l'intervalle de 6 à 11 nm (60 à 110 Å).

3. Procédé selon la revendication 1 ou 2, dans lequel n = 2.
